# EUROPÄISCHE PATENTANMELDUNG

(11) **EP 4 260 775 A1**
(43) Veröffentlichungstag der Anmeldung: **18.10.2023**
(21) Anmeldenummer: 23162241.6
(22) Anmeldetag: 16.03.2023
(51) Int. Cl.: A47K 3/30

(54) **STABILISATOR ZUM STABILISIEREN EINER SCHEIBE**

(30) Priorität: 12.04.2022 DE 202022101974 U
(71) Anmelder: Schulte Duschkabinenbau GmbH & Co. KG, 59846 Sundern-Hachen (DE)
(72) Erfinder: Albers, Martin, 59846 Sundern (DE)
(74) Vertreter: Von Rohr Patentanwälte Partnerschaft mbB

(57) **Zusammenfassung**

Die Erfindung betrifft einen Stabilisator zum Stabilisieren einer Scheibe, insbesondere einer Duschtrennwand, wobei der Stabilisator (1) eine Halterung (4) zum insbesondere klemmenden Halten der Scheibe (3) und ein Wandbefestigungsteil (5) zum Befestigen des Stabilisators (1) an einer Wand (2) aufweist, und wobei die Halterung (4) eine zumindest im Wesentlichen U-förmige Aufnahme (8) für die Scheibe (3) aufweist.

Gemäß einem ersten Aspekt weist die Halterung (4) einen sich verjüngenden Kanal (12) mit einem Gewinde (12A) zur Aufnahme (8) einer Schraube (13) auf.

Gemäß einem weiteren Aspekt weist die Halterung (4) ein Halteteil (14) und einen formschlüssig in dem Halteteil (14) gehaltenen oder haltbaren Klemmkeil (15) zum klemmenden Halten der Scheibe (3) auf.

## Beschreibung

Die vorliegende Erfindung betrifft einen Stabilisator zum Stabilisieren einer Scheibe, insbesondere einer Duschtrennwand, nach dem Oberbegriff des Anspruchs 1 sowie ein System mit einem Stabilisator und einer Scheibe.

Grundsätzlich sind Stabilisatoren zum Stabilisieren einer Scheibe bzw. einer Duschtrennwand aus dem Stand der Technik bekannt.

Duschen weisen häufig als Duschtrennwand eine Glasscheibe auf, die mit einer Längsseite an einer Wand und ggf. auch mit einer Querseite am Boden befestigt ist. Hierbei kann ein Problem darin bestehen, dass durch das verhältnismäßig hohe Gewicht der Duschtrennwand bzw. Glasscheibe und die nur einseitige oder ggf. zweiseitige Befestigung starke Kräfte auf die verwendeten Befestigungseinrichtungen wirken und/oder dass die Befestigung nicht ausreichend stabil ist. Dies birgt die Gefahr von Beschädigungen der Duschtrennwand und/oder Verletzungen eines Benutzers bei einem auftretenden Schaden. Zur Stabilisierung bzw. Entlastung werden daher teilweise Stabilisatoren eingesetzt, die die Scheibe bzw. Duschtrennwand zusätzlich halten bzw. stabilisieren. Üblicherweise ist ein solcher Stabilisator im Wesentlichen stangenartig ausgebildet und mit einem Ende an einer Wand befestigt. An dem anderen Ende weist der Stabilisator üblicherweise eine Halterung zum Halten der Scheibe, insbesondere an deren Oberkante, auf.

Die DE 20 2010 011 693 U1 betrifft ein Aussteifungssystem zur Montage von Echtglasscheiben oder anderen Werkstoffplatten im Nass- und Wohn- sowie im Außenbereich. Die Aussteifungsverstrebung ist wandseitig mit einer Wandbefestigungsplatte versehen, die fest mit der Wand verbunden wird. Zur Befestigung der Aussteifungsstrebe auf der Glasseite wird ein Halter auf die Glaskante aufgesteckt und durch Eindrehen einer Schraube befestigt. Diese Schraube drückt einen Keil über eine entsprechende Schräge in die Klemmhalteraufnahme und presst somit das Glas gegen eine aus rutschfestem Material gefertigte Gegenlage, die zum Schutz von empfindlichen Materialien so ausgeformt ist, dass die Kante nicht beschädigt wird.

Es ist eine Aufgabe der vorliegenden Erfindung, einen Stabilisator anzugeben, der eine einfache Montage ermöglicht und/oder einen möglichst einfachen Aufbau aufweist und/oder einfach und/oder kostengünstig herzustellen ist.

Die obige Aufgabe wird gelöst durch einen Stabilisator gemäß Anspruch 1. Vorteilhafte Weiterbildungen sind Gegenstand der Unteransprüche.

Ein erfindungsgemäßer Stabilisator dient zum Stabilisieren einer Scheibe. Die Scheibe ist insbesondere eine Duschtrennwand.

Der erfindungsgemäße Stabilisator weist eine Halterung zum insbesondere klemmenden Halten der Scheibe sowie ein Wandbefestigungsteil zum Befestigen des Stabilisators an einer Wand auf. Ferner weist die Halterung des Stabilisators eine zumindest im Wesentlichen U-förmige Aufnahme für die Scheibe auf.

Gemäß einem ersten Aspekt der vorliegenden Erfindung weist der Stabilisator bzw. die Halterung einen sich verjüngenden Kanal mit einem Gewinde zur Aufnahme einer Schraube auf. Dies ist einem einfachen Aufbau der Halterung bzw. des Stabilisators sowie einer einfachen Montage zuträglich.

Gemäß einem weiteren, auch unabhängig realisierbaren Aspekt weist die Halterung einen Klemmkeil zum klemmenden Halten der Scheibe auf. Ferner weist die Halterung vorzugsweise ein Halteteil auf. Der Klemmkeil ist vorzugsweise formschlüssig in dem Halteteil gehalten oder haltbar. Hierdurch wird die Montage des Stabilisators vereinfacht, da der Klemmkeil zunächst derart in das Halteteil eingesetzt bzw. daran angeordnet werden kann, dass der Klemmkeil formschlüssig gehalten ist und nicht von alleine aus dem Halteteil herausfallen kann. Somit kann anschließend die Scheibe in der Halterung bzw. Aufnahme angeordnet werden und dort eingeklemmt werden, ohne dass hierbei zusätzlich noch der Klemmkeil gesichert werden muss. Andererseits wird durch die zweiteilige Ausführung der Halterung mit dem Klemmkeil und dem Halteteil die Herstellung des Stabilisators bzw. der Halterung vereinfacht.

Der Kanal erstreckt sich vorzugsweise seitlich neben der Aufnahme und/oder im Wesentlichen parallel zur Aufnahme. Hierdurch wird eine großflächige Verteilung der Klemmkraft erreicht, sodass die punktuellen Belastungen für die Scheibe und die Halterung minimiert werden. Zudem wird hierdurch die Montage erleichtert.

Der Kanal ist in einer üblichen Gebrauchslage des Stabilisators vorzugsweise nach oben offen. Hierdurch wird die Montage des Stabilisators erleichtert, denn die Scheibe erstreckt sich von der Halterung aus im Wesentlichen nach unten und zur Seite, sodass die Schraube einfach von oben in den Kanal eingeschraubt werden kann, ohne dass hierbei die Scheibe stört bzw. im Weg ist.

Die Halterung ist vorzugsweise dazu ausgebildet, dass sich durch Einschrauben der Schraube in den Kanal die Halterung oder ein Teil davon verformt, insbesondere derart, dass eine in der Aufnahme angeordnete Scheibe eingeklemmt wird. Hierdurch kann auf einfache Weise ein klemmendes Halten der Scheibe in der Halterung erreicht werden. Es wird also die Montage erleichtert.

Der Klemmkeil besteht vorzugsweise aus einem flexiblen Material, insbesondere Kunststoff. Insbesondere ist der Klemmkeil dazu ausgebildet, sich beim Einschrauben der Schraube in den Kanal zu verformen und/oder eine in der Aufnahme angeordnete Scheibe einzuklemmen. Dies ist einer einfachen Montage zuträglich.

Es ist bevorzugt, dass der Klemmkeil die U-förmige Aufnahme aufweist oder bildet. Die U-förmige Aufnahme weist insbesondere zwei sich gegenüberliegende Längssegmente und ein dazwischen angeordnetes Quersegment auf oder ist dadurch gebildet. Vorzugsweise weist der Klemmkeil ein Gewindesegment auf, welches das Gewinde oder zumindest einen Abschnitt davon aufweist oder bildet. Dies ist einem einfachen Aufbau und einer einfachen Montage zuträglich.

Das Gewindesegment ist vorzugsweise an einem der Längssegmente angeordnet und/oder einstückig damit ausgebildet. Hierdurch wir die Anzahl der einzelnen Teile verringert und somit die Herstellung und Montage vereinfacht.

Vorzugsweise ist das Gewindesegment bzw. dessen Gewinde konisch ausgebildet. Hierdurch werden ein guter Halt der Schraube in dem Gewinde und ein stärkeres Einklemmen der Scheibe bei zunehmendem Einschrauben der Schraube in den Kanal erreicht. Dies ermöglicht eine einfache Einstellung der Klemmkraft, mit der die Scheibe eingeklemmt wird.

Der Kanal ist vorzugsweise zwischen dem Klemmkeil und einer dem Klemmkeil gegenüberliegenden und/oder zugeordneten Gegenfläche gebildet. Hierdurch wird ein einfacher Aufbau erreicht.

Die Gegenfläche verläuft vorzugsweise schräg zu einer Längsachse des Kanals. Hierdurch wird auf einfache Weise die Verjüngung des Kanals realisiert.

Die Gegenfläche kann einen Gewindeabschnitt aufweisen und somit insbesondere gemeinsam mit dem Klemmkeil ein Gewinde bilden. Dies ist jedoch nicht zwingend.

Der Stabilisator weist vorzugsweise die Schraube auf. Insbesondere ist die Schraube als Madenschraube ausgebildet. Dies ermöglicht einen platzsparenden Aufbau der Halterung, da keine Freiräume für einen Schraubenkopf vorgesehen werden müssen. Außerdem kann eine als Madenschraube ausgebildete Schraube vollständig in den Kanal eingeschraubt werden, sodass sie von außen nicht sichtbar ist.

Gemäß einem weiteren Aspekt betrifft die vorliegende Erfindung auch ein System mit einem Stabilisator und einer Scheibe, wobei der Stabilisator wie voranstehend beschrieben und/oder nachfolgend näher erläutert ausgebildet ist.

Die vorgenannten Aspekte und Merkmale der vorliegenden Erfindung sowie die sich aus der weiteren Beschreibung ergebenden Aspekte und Merkmale der vorliegenden Erfindung können unabhängig voneinander, aber auch in beliebiger Kombination realisiert werden.

Weitere Vorteile, Merkmale, Eigenschaften und Aspekte der vorliegenden Erfindung ergeben sich aus den Ansprüchen und der folgenden Beschreibung einer bevorzugten Ausführungsform anhand der Zeichnung. Es zeigt:
- Fig. 1: eine perspektivische Darstellung eines Stabilisators;
- Fig. 2: einen ersten Schnitt durch den Stabilisator, wobei eine Halterung in einer Ausgangsposition dargestellt ist;
- Fig. 3: einen zweiten Schnitt durch den Stabilisator, wobei die Halterung in einer Klemmposition dargestellt ist;
- Fig. 4: eine perspektivische Darstellung eines Halteteils des Stabilisators; und
- Fig. 5: eine perspektivische Darstellung eines Klemmkeils des Stabilisators.

In den Figuren werden für gleiche oder ähnliche Teile dieselben Bezugszeichen verwendet, wobei entsprechende Eigenschaften und Vorteile erreicht werden können, auch wenn eine wiederholte Beschreibung aus Vereinfachungsgründen weggelassen ist.

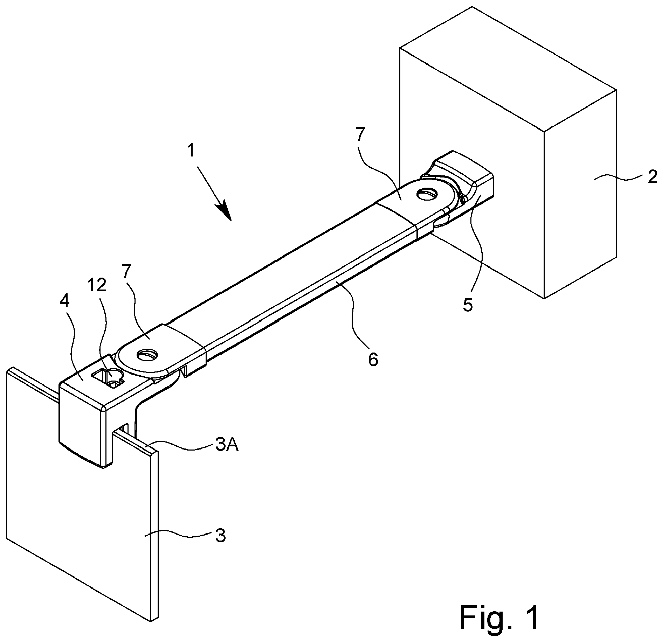

Fig. 1 zeigt in einer schematischen perspektivischen Ansicht einen vorschlagsgemä-ßen Stabilisator 1. Bei der Darstellung gemäß Fig. 1 ist der Stabilisator 1 an einer Wand 2 befestigt und eine Scheibe 3 ist mit dem Stabilisator 1 bzw. einer Halterung 3 des Stabilisators 1 gehalten bzw. darin eingeklemmt. Der Stabilisator 1 ist in der Fig. 1 also montiert bzw. in seiner Einbaulage dargestellt.

In der folgenden und der vorhergehenden Beschreibung benutzte Begriffe, die sich auf absolute Positionen oder Orientierungen im Raum beziehen, wie oben, unten, horizontal, vertikal u. dgl., beziehen sich vorzugsweise auf den montierten Stabilisator 1, selbst wenn dies nicht explizit erwähnt wird. Insbesondere bezeichnet der Begriff "Einbaulage" des Stabilisators 1 bzw. eines Teils davon die vorgesehene Orientierung bzw. Positionierung des Stabilisators 1 bzw. Teils im montierten bzw. eingebauten Zustand, wie insbesondere in Fig. 1 dargestellt.

Die Scheibe 3 ist insbesondere eine Duschtrennwand. Vorzugsweise ist die Scheibe 3 als insbesondere durchsichtige und/oder lichtdurchlässige Scheibe, beispielsweise als Glasscheibe oder Kunststoffscheibe, ausgebildet.

Eine Duschtrennwand ist insbesondere eine Scheibe oder Wand, die einen Duschraum von einem anderen Raum abtrennt bzw. einen Raum, wie beispielsweise ein Badezimmer, in einen Duschraum und einen anderen Bereich unterteilt.

Der Stabilisator 1 ist insbesondere zum Halten bzw. Stabilisieren der Scheibe 3 ausgebildet.

Der Stabilisator 1 weist eine Halterung 4 und ein Wandbefestigungsteil 5 auf.

Die Halterung 4 ist dazu ausgebildet, die Scheibe 3 zu halten. Insbesondere ist die Halterung 4 zum klemmenden Halten der Scheibe 3 ausgebildet.

Das Wandbefestigungsteil 5 ist zum Befestigen des Stabilisators 1 an der Wand 2 ausgebildet. Das Wandbefestigungsteil 5 ist vorzugsweise mittels Verkleben oder Verschrauben an der Wand 2 befestigbar bzw. befestigt.

Vorzugsweise weist der Stabilisator 1 eine Strebe 6 auf, die an bzw. zwischen der Halterung 4 und dem Wandbefestigungsteil 5 angeordnet bzw. anordenbar und an diesen befestigt bzw. befestigbar ist.

Der Stabilisator 1 und/oder die Strebe 6 ist/sind vorzugsweise zumindest im Wesentlichen länglich und/oder stangenartig ausgebildet. Vorzugsweise weist die Strebe 6 ein Hohlprofil auf oder ist hierdurch gebildet. Die Strebe 6 ist vorzugsweise durch Verschrauben mit der Haltung 4 und/oder dem Wandbefestigungsteil 5 verschraubbar. Hier sind jedoch auch andere Lösungen möglich.

Vorzugsweise ist die Strebe 6 jeweils über ein Gelenk 7 mit der Halterung 4 und/oder dem Wandbefestigungsteil 5 verbunden bzw. verbindbar. Die Strebe 6 ist - insbesondere im nicht montierten Zustand bzw. vor der Montage - vorzugsweise relativ zu der Halterung 4 und/oder dem Wandbefestigungsteil 5 verschwenkbar. Dies ermöglicht insbesondere eine nicht-rechtwinklige Anordnung des Stabilisators 1 bzw. der Strebe 6 relativ zu der Wand 2 und/oder der Scheibe 3. Insbesondere ist die Strebe 6 bzw. der Stabilisator 1 also schräg zur Wand 2 und/oder Scheibe 3 anordenbar bzw. daran befestigbar. Dies ermöglicht einen flexiblen Einsatz des Stabilisators 1 bzw. eine einfache Anpassung des Stabilisators 1 an verschiedene örtliche Einbaubedingungen.

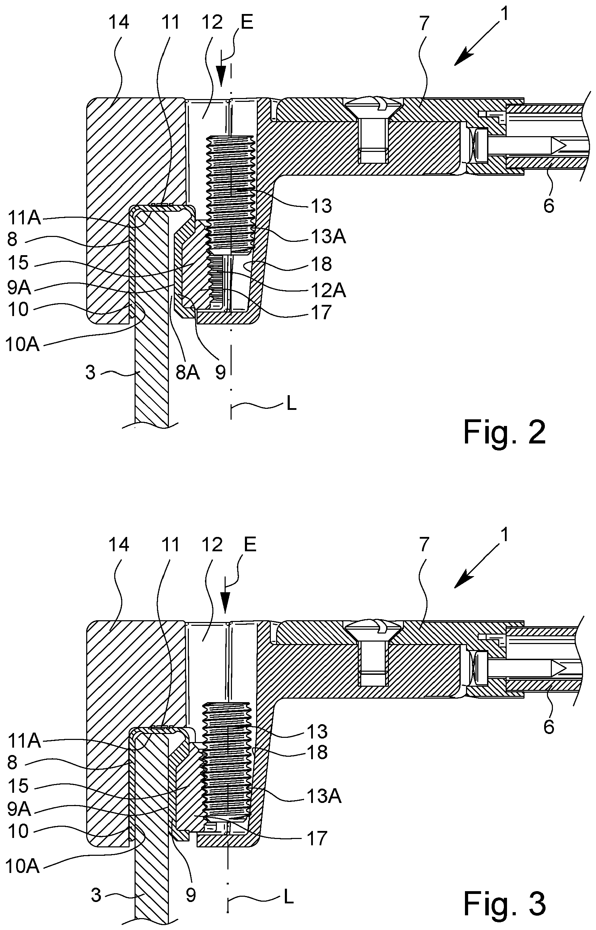

Nachfolgend wird der Stabilisator 1 insbesondere mit Bezug auf Fig. 2 und 3 näher erläutert. In den Fig. 2 und 3 ist jeweils ein Schnitt des Stabilisators 1 dargestellt, wobei Fig. 2 eine Ausgangsposition des Stabilisators 1 zeigt und Fig. 3 eine Klemmposition des Stabilisators 1 zeigt. In der Ausgangsposition ist insbesondere die Scheibe 3 in der Halterung 4 anordenbar. In Fig. 3 bzw. der Klemmposition ist insbesondere die Scheibe 3 in der Halterung 4 eingeklemmt bzw. einklemmbar.

Die Halterung 4 weist vorzugsweise eine zumindest im Wesentlichen U-förmige Aufnahme 8 für die Scheibe 3 auf. Die Aufnahme 8 ist vorzugsweise als separates Bauteil ausgebildet, kann jedoch auch durch Abschnitte und/oder Flächen der Halterung 4, insbesondere des nachfolgend noch erläuterten Halteteils 14, gebildet sein. Vorzugsweise ist in der Aufnahme 8 die Scheibe 3 anordenbar.

Die Halterung 4 bzw. Aufnahme 8 ist vorzugsweise dazu ausgebildet, eine Kante 3A der Scheibe 3 aufzunehmen und/oder die Scheibe 3 an einer Kante 3A bzw.in der Nähe einer Kante 3A zu halten. Die Kante 3A ist insbesondere eine Oberkante der Scheibe 3, wie in den Fig. 1 bis 3 dargestellt. Eine Oberkante ist insbesondere eine in der Einbaulage nach oben weisende Kante.

Die Aufnahme 8 weist vorzugsweise zwei Längssegmente 9, 10 und ein Quersegment 11 auf. Die Längssegmente 9, 10 und das Quersegment 11 weisen vorzugsweise jeweils eine Anlagefläche 9A, 10A, 11A zur Anlage an der Scheibe 3 auf bzw. bilden diese. In der Einbaulage sind die Längssegmente 9, 10 bzw. deren Anlageflächen 9A, 10A vorzugsweise zumindest im Wesentlichen vertikal ausgerichtet und ist das Quersegment 11 bzw. dessen Anlagefläche 11A vorzugsweise zumindest im Wesentlichen horizontal ausgerichtet.

Vorzugsweise sind die Längssegmente 9, 10 einander gegenüberliegend angeordnet. Vorzugsweise ist das Quersegment 11 quer zu den und/oder zwischen den Längssegmenten 9, 10 angeordnet. Vorzugsweise sind die Längssegmente 9, 10 mittels des Quersegments 11 miteinander verbunden. Durch die Längssegmente 9, 10 und das Quersegment 11 ist vorzugsweise zumindest im Wesentlichen eine U-Form gebildet.

Die Längssegmente 9, 10 bzw. deren Anlageflächen 9A, 10A sind, insbesondere in der Ausgangsposition, vorzugsweise zumindest im Wesentlichen parallel zueinander angeordnet. Das Quersegment 11 bzw. dessen Anlagefläche 11A ist vorzugsweise zumindest im Wesentlichen rechtwinklig zu den Längssegmenten 9, 10 bzw. deren Anlageflächen 9A, 10A angeordnet.

Vorzugsweise weist die Aufnahme 8 einen Aufnahmeraum 8A auf bzw. begrenzt oder definiert die Aufnahme 8 einen Aufnahmeraum 8A.Der Aufnahmeraum 8A ist vorzugsweise zwischen den Längssegmenten 9, 10 und dem Quersegment 11 bzw. deren Anlageflächen 9A, 10A, 11A gebildet bzw. durch diese begrenzt.

Die Halterung 4 weist vorzugsweise einen Kanal 12 auf. Der Kanal 12 ist zur Aufnahme einer Schraube 13 ausgebildet.

Ein Kanal 12 im Sinne der vorliegenden Erfindung ist insbesondere ein Raum bzw. Freiraum, in den die Schraube 13 einführbar bzw. einschraubbar ist.

Der Kanal 12 bzw. der den Kanal 12 bildende Freiraum ist vorzugsweise durch die Halterung 4 bzw. Abschnitte der Halterung 4 begrenzt bzw. gebildet. Insbesondere weist die Halterung 4 einen oder mehrere Wandabschnitte auf, die den Kanal 12 begrenzen bzw. durch die der Kanal 12 gebildet ist.

Der Kanal 12 weist vorzugsweise eine Längsachse L auf bzw. erstreckt sich insbesondere entlang einer Längsachse L. In der Einbaulage verläuft die Längsachse L vorzugsweise vertikal. Wenn in dem Stabilisator 1 bzw. der Halterung 4 bzw. der Aufnahme 8 eine Scheibe 3 eingeklemmt ist, verläuft die Längsachse L vorzugsweise zumindest im Wesentlichen parallel zur Scheibe 3.

Der Kanal 12 erstreckt sich vorzugsweise seitlich neben der Aufnahme 8. Insbesondere erstreckt sich der Kanal 12 vorzugsweise zumindest im Wesentlichen parallel zu der Aufnahme 8. Wenn eine Scheibe 3 in der Halterung 4 bzw. Aufnahme 8 gehalten ist, verläuft der Kanal 12 bzw. dessen Längsachse L vorzugsweise zumindest im Wesentlichen parallel zu der Scheibe 3.

Die Schraube 13 weist insbesondere ein Gewinde 13A auf. Vorzugsweise weist der Stabilisator 1 die Schraube 13 auf.

Die Schraube 13 ist insbesondere als Gewindestift bzw. Madenschraube ausgebildet. Mit anderen Worten weist die Schraube 13 vorzugsweise keinen Schraubenkopf auf. Vorzugsweise verjüngt sich der Kanal 12, insbesondere entlang der Längsachse L und/oder in der Einschraubrichtung E. Mit anderen Worten verringert sich der Durchmesser bzw. Querschnitt des Kanals 12 entlang der Längsachse L und/oder in Einschraubrichtung E. Die Einschraubrichtung E ist in den Fig. 2 und 3 mittels eines Pfeils dargestellt. Die Einschraubrichtung E verläuft insbesondere entlang der Längsachse L und/oder von oben nach unten.

Die Halterung 4 ist vorzugsweise dazu ausgebildet, dass sich durch Einschrauben der Schraube 13 in den Kanal 12 die Halterung 4 oder ein Teil davon verformt. Insbesondere ist die Verformung derart, dass hierdurch eine Scheibe 3 in der Aufnahme 8 einklemmbar ist bzw. eine in der Aufnahme 8 angeordnete Scheibe 3 eingeklemmt wird.

Der Kanal 12 weist vorzugsweise ein Gewinde 12A auf. Insbesondere korrespondiert das Gewinde 12A zu dem Gewinde 13A der Schraube 13 und/oder sind das Gewinde 13A der Schraube 13 und das Gewinde 12A des Kanals 12 komplementär zueinander ausgebildet.

Das Gewinde 12A des Kanals 12 ist vorzugsweise nicht vollständig umlaufend. Mit anderen Worten weist nur ein Teil bzw. Abschnitt der den Kanal 12 begrenzenden Flächen das Gewinde 12A bzw. einen Gewindeabschnitt auf.

Vorzugsweise ist das Gewinde 12A wendelartig oder spiralartig ausgebildet. Ein wendelartiges oder spiralartiges Gewinde 12 ist insbesondere auf einer zylindrischen oder konischen Grundfläche angeordnet ist bzw. durch Gewindegänge auf einer zylindrischen oder konischen Grundfläche gebildet.

Das Gewinde 12A kann jedoch auch durch zu dem Gewinde 13A korrespondierende bzw. komplementäre Riefen und/oder eine Zahnstange o. dgl. gebildet sein. Die Riefen bzw. die Zahnstange bilden vorzugsweise Gewindegänge auf einer zumindest im Wesentlichen ebenen Grundfläche.

Der Kanal 12 ist vorzugsweise konisch ausgebildet, insbesondere konisch verjüngt.

Unter dem Begriff "konisch" ist hierbei insbesondere zu verstehen, dass der Kanal 12 oder zumindest ein Abschnitt davon zumindest im Wesentlichen einem Abschnitt eines Kegels entspricht. Mit anderen Worten ist der Kanal 12 bereits dann im Sinne der vorliegenden Offenbarung "konisch" ausgebildet, wenn er lediglich einen kegelförmigen Abschnitt aufweist. Für eine konische Ausbildung des Kanals 12 im Sinne der vorliegenden Erfindung ist es vorzugsweise nicht erforderlich, dass der Kanal 12 vollständig kegelförmig ausgebildet ist.

Insbesondere ist der Kanal 12 dadurch konisch ausgebildet, dass ein oder mehrere Abschnitte der Halterung 4, die den Kanal 12 begrenzt bzw. durch die der Kanal 12 definiert ist, insbesondere das nachfolgend noch erläuterte Gewindesegment 17 und/oder die nachfolgend noch erläuterte Gegenfläche 18, zumindest im Wesentlichen die Form einer Kegelmantelfläche aufweisen.

In der Einbaulage des Stabilisators 1 ist der Kanal 12 vorzugsweise nach oben offen, wie insbesondere aus den Fig. 2 und 3 ersichtlich ist.

Die Halterung 4 ist vorzugsweise mehrteilig ausgebildet, besteht vorzugsweise also aus mehreren separaten Bauteilen. Insbesondere weist die Halterung 4 ein Halteteil 14 und einen Klemmkeil 15 auf.

Vorzugsweise ist der Klemmkeil 15 ein von dem Halteteil 14 separates Bauteil. Grundsätzlich ist es jedoch auch möglich, dass das Halteteil 14 den Klemmkeil 14 aufweist oder bildet bzw. der Klemmkeil 15 einstückig mit dem Halteteil 14 ausgebildet ist.

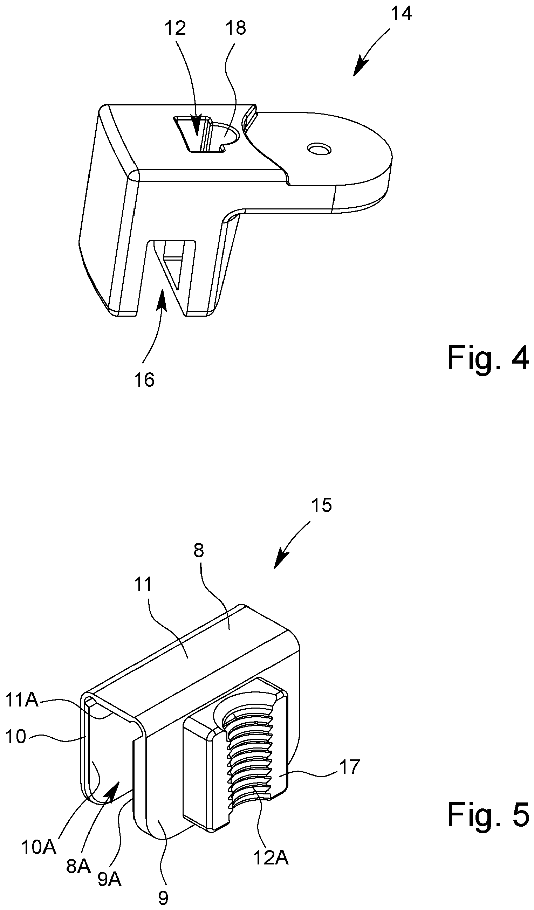

Das Halteteil 14 ist in Fig. 4 in einer perspektivischen Darstellung gezeigt. Die Fig. 5 zeigt den Klemmkeil 15 in einer perspektivischen Darstellung.

Vorzugsweise ist das Halteteil 14 über das Gelenk 7 mit der Strebe 6 verbunden bzw. verbindbar.

Der Klemmkeil 15 ist insbesondere zum klemmenden Halten bzw. Einklemmen der Scheibe 3 ausgebildet.

Der Klemmkeil 15 ist vorzugsweise in das Halteteil 14 einsetzbar bzw. darin eingesetzt.

Das Halteteil 14 weist insbesondere eine Aussparung 16 zum Aufnehmen der Aufnahme 8 und/oder des Klemmkeils 15 auf.

Ganz besonders bevorzugt ist der Klemmkeil 15 formschlüssig in dem Halteteil 14, insbesondere in der Aussparung 16, gehalten oder darin haltbar. Die Aussparung 16 ist vorzugsweise auf einer Unterseite des Halteteils 14 angeordnet und/oder nach unten offen. Insbesondere sind der Kanal 12 und die Aussparung 16 in entgegengesetzten Richtungen offen und/oder an gegenüberliegenden Seiten des Halteteils 14 bzw. der Halterung 4 angeordnet.

Der Klemmkeil 15 ist insbesondere zum klemmenden Halten bzw. Einklemmen der Scheibe 3 ausgebildet.

Der Klemmkeil 15 ist vorzugsweise zumindest abschnittsweise flexibel und/oder besteht zumindest abschnittsweise aus einem flexiblen Material. Insbesondere besteht der Klemmkeil 15 aus Kunststoff. Der Klemmkeil 15 ist vorzugsweise zumindest teilweise verformbar.

Insbesondere ist der Klemmkeil 15 derart verformbar, dass er in die Aussparung 16 einführbar ist und/oder dass durch Einschrauben der Schraube 13 in den Kanal 12 die Scheibe 3 mittels des Klemmkeils 15 einklemmbar ist.

Ferner ist der Klemmkeil 15 vorzugsweise elastisch. Insbesondere ist der Klemmkeil 15 derart elastisch, dass er nach Einsetzen bzw. Einführen in die Aussparung 16 selbständig wieder in seine ursprüngliche Position bzw. Form zurückkehrt, sodass er formschlüssig in der Halterung 4 bzw. Aussparung 16 gehalten ist, wie insbesondere in Fig. 2 dargestellt.

Besonders bevorzugt erfolgt die Montage des Stabilisators 1 bzw. der Halterung 4 also dadurch, dass der Klemmkeil 15 zunächst verformt bzw. zusammengedrückt wird, dann in die Aussparung 16 eingeführt und anschließend losgelassen wird, sodass er sich elastisch in seine Ausgangsposition vor der Verformung zurückbewegt und somit formschlüssig in der Aussparung 16 gehalten ist.

Vorzugsweise weist der Klemmkeil 15 die Aufnahme 8 auf oder bildet der Klemmkeil 15 die Aufnahme 8. Grundsätzlich ist es jedoch auch möglich, dass das Halteteil 14 die Aufnahme 8 aufweist oder bildet bzw. die Aufnahme 8 einstückig mit dem Halteteil 14 ausgebildet ist.

Die Fig. 2 zeigt den Stabilisator 1 bzw. die Halterung 4 mit dem in das Halteteil 14 eingesetzten bzw. in dem Halteteile 14 angeordneten Klemmkeil 15. In Fig. 2 ist die Halterung 4 bzw. der Klemmkeil 15 in einer Ausgangsposition dargestellt.

In der Ausgangsposition passt, wie aus Fig. 2 ersichtlich, die Schraube 13 in einen Eingangsbereich des Kanals 12. Der Kanal 12 verjüngt sich vorzugsweise, sodass der Kanal 12 unterhalb der Schraube 13 einen geringeren Durchmesser als die Schraube 13 hat. Dies führt bei weiterem Einschrauben der Schraube 13 in den Kanal 12 dazu, dass der Klemmkeil 15 bzw. die Aufnahme 8 sich verformt bzw. durch die Schraube 13 verformt wird. Insbesondere verformt sich die Längsseite 9 der Aufnahme 8 bzw. wird die Längsseite 9 in Richtung der gegenüberliegenden Längsseite 10 der Aufnahme 8 gedrückt oder verformt oder verschwenkt.

Durch das Einschrauben der Schraube 13 in den Kanal 12 wird daher der durch die Aufnahme 8 gebildete bzw. von der Aufnahme 8 umschlossene Aufnahmeraum 8A für die Scheibe 3 verkleinert bzw. der Abstand zwischen den Längssegmenten 9, 10 der Aufnahme 8 bzw. deren Anlageflächen 9A, 10A verringert. Somit ist durch Einschrauben der Schraube 13 in den Kanal 12 die Scheibe 3 in der Aufnahme 8 bzw. Halterung 4 einklemmbar.

In der Darstellung gemäß Fig. 3 ist die Schraube 13 vollständig in den Kanal 12 eingeschraubt. Insbesondere ist in Fig. 3 die Scheibe 3 in der Aufnahme 8 bzw. Halterung 4 eingeklemmt bzw. klemmend darin gehalten. Somit stellt die in Fig. 3 dargestellte Position insbesondere eine Klemmposition des Stabilisators 1 bzw. der Halterung 4 dar.

Wenn die Schraube 13 vollständig in den Kanal 12 eingeschraubt ist, wie insbesondere in Fig. 3 dargestellt, ist der Aufnahmeraum 8A maximal verkleinert bzw. der Abstand zwischen den Längssegmenten 9, 10 bzw. deren Anlageflächen 9A, 10A minimal und/oder die auf die Scheibe 3 ausgeübte Haltekraft bzw. Klemmkraft maximal.

Die Halterung 4 bzw. der Klemmkeil 15 weist vorzugsweise ein Gewindesegment 17 auf. Grundsätzlich wäre es jedoch auch möglich, dass das Halteteil 14 das Gewindesegment 17 aufweist bzw. das Gewindesegment 17 einstückig mit dem Halteteil 14 ausgebildet ist.

Das Gewindesegment 17 weist vorzugsweise das Gewinde 12A des Kanals 12 oder zumindest einen Abschnitt davon auf oder bildet dieses/diesen.

Das Gewindesegment 17 ist vorzugsweise an der Aufnahme 8, insbesondere an einem der Längssegmente 9, 10, angeordnet bzw. befestigt. Das Gewindesegment 17 ist besonders bevorzugt einstückig mit der Aufnahme 8 ausgebildet. Insbesondere ist das Gewindesegment 17 auf einer dem Längssegment 10 zugewandten und/oder der Anlagefläche 9A abgewandten Seite des Längssegments 9 angeordnet.

Vorzugsweise ist der Klemmkeil 15 ein einstückiges Bauteil, das die Aufnahme 8 und das Gewindesegment 17 aufweist oder hierdurch gebildet ist.

Der Kanal 12 ist vorzugsweise zwischen dem Klemmkeil 15 und einer dem Klemmkeil 15 gegenüberliegenden bzw. zugeordneten Gegenfläche 18 gebildet bzw. zumindest im Wesentlichen durch den Klemmkeil 15 und die Gegenfläche 18 begrenzt. Vorzugsweise weist das Halteteil 14 die Gegenfläche 18 auf oder bildet das Halteteil 14 die Gegenfläche 18.

Vorzugsweise ist der Kanal 12 durch zwei separate Bauteile gebildet begrenzt, im Ausführungsbeispiel insbesondere durch den Klemmkeil 15 bzw. dessen Gewindesegment 17 einerseits und durch das Halteteil 14 bzw. dessen Gegenfläche 18 andererseits.

Die Gegenfläche 18 ist vorzugsweise zylindrisch oder konisch ausgebildet. Besonders bevorzugt verläuft die Gegenfläche 18 schräg zur Längsachse L des Kanals 12 und/oder wird durch die Gegenfläche 18 der Kanal 12 in Einschraubrichtung E, insbesondere konisch, verjüngt.

In dem in den Figuren dargestellten Ausführungsbeispiel ist die Gegenfläche 18 eine zumindest im Wesentlichen glatte bzw. ebene Fläche. Insbesondere weist im dargestellten Ausführungsbeispiel die Gegenfläche 18 also kein Gewinde auf.

Abweichend von dem dargestellten Ausführungsbeispiel ist es jedoch auch möglich, dass die Gegenfläche 18 einen Gewindeabschnitt aufweist oder diesen bildet. Insbesondere kann also das Gewinde 12A des Kanals 12 durch verschiedene Abschnitte gebildet sein, insbesondere den Gewindeabschnitt des Gewindesegments 17 und einen dazu korrespondierenden bzw. diesen ergänzenden Gewindeabschnitt, der an der Gegenfläche 18 angeordnet ist.

Der Stabilisator 1 und die Scheibe 3 bilden insbesondere ein System.

Unterschiedliche Aspekte der vorliegenden Erfindung und Ausführungsvarianten können unabhängig voneinander und in beliebigen Kombinationen untereinander realisiert werden und vorteilhaft sein.

### Bezugszeichenliste:

- 1: Stabilisator
- 2: Wand
- 3: Scheibe
- 3A: Kante
- 4: Halterung
- 5: Wandbefestigungsteil
- 6: Strebe
- 7: Gelenk
- 8: Aufnahme
- 8A: Aufnahmeraum
- 9: Längssegment
- 9A: Anlagefläche
- 10: Längssegment
- 10A: Anlagefläche
- 11: Quersegment
- 11A: Anlagefläche
- 12: Kanal
- 12A: Gewinde von 12
- 13: Schraube
- 13A: Gewinde von 13
- 14: Halteteil
- 15: Klemmkeil
- 16: Aussparung
- 17: Gewindesegment
- 18: Gegenfläche

- E: Einschraubrichtung
- L: Längsachse

## Patentansprüche

1. Stabilisator (1) zum Stabilisieren einer Scheibe (3), insbesondere einer Duschtrennwand,
wobei der Stabilisator (1) eine Halterung (4) zum insbesondere klemmenden Halten der Scheibe (3) und ein Wandbefestigungsteil (5) zum Befestigen des Stabilisators (1) an einer Wand (2) aufweist,
wobei die Halterung (4) eine zumindest im Wesentlichen U-förmige Aufnahme (8) für die Scheibe (3) aufweist,
**dadurch gekennzeichnet,**
**dass** die Halterung (4) einen sich verjüngenden Kanal (12) mit einem Gewinde (12A) zur Aufnahme (8) einer Schraube (13) aufweist, und/oder
**dass** die Halterung (4) ein Halteteil (14) und einen formschlüssig in dem Halteteil (14) gehaltenen oder haltbaren Klemmkeil (15) zum klemmenden Halten der Scheibe (3) aufweist.

2. Stabilisator nach Anspruch 1, **dadurch gekennzeichnet, dass** der Kanal (12) sich seitlich neben der Aufnahme (8) und/oder im Wesentlichen parallel zur Aufnahme (8) erstreckt.

3. Stabilisator Anspruch 1 oder 2, **dadurch gekennzeichnet, dass** der Kanal (12) in einer Einbaulage des Stabilisators (1) nach oben offen ist.

4. Stabilisator nach einem der voranstehenden Ansprüche, **dadurch gekennzeichnet, dass** die Halterung (4) dazu ausgebildet ist, dass sich durch Einschrauben der Schraube (13) in den Kanal (12) die Halterung (4) oder ein Teil davon verformt, insbesondere derart, dass eine in der Aufnahme (8) angeordnete Scheibe (3) eingeklemmt wird.

5. Stabilisator nach einem der voranstehenden Ansprüche, **dadurch gekennzeichnet, dass** die Halterung (4) einen Klemmkeil (15) zum klemmenden Halten der Scheibe (3) aufweist.

6. Stabilisator nach einem der voranstehenden Ansprüche, **dadurch gekennzeichnet, dass** der Klemmkeil (15) aus einem flexiblen Material besteht und/oder der Klemmkeil (15) dazu ausgebildet ist, sich bei Einschrauben der Schraube (13) in den Kanal (12) zu verformen und/oder eine in der Aufnahme (8) angeordnete Scheibe (3) einzuklemmen.

7. Stabilisator nach einem der voranstehenden Ansprüche, **dadurch gekennzeichnet, dass** der Klemmkeil (15) die U-förmige Aufnahme (8) aufweist oder bildet, insbesondere wobei die U-förmige Aufnahme (8) zwei sich gegenüberliegende Längssegmente (9, 10) und ein dazwischen angeordnetes Quersegment (11) aufweist oder dadurch gebildet ist.

8. Stabilisator nach einem der voranstehenden Ansprüche, **dadurch gekennzeichnet, dass** der Klemmkeil (15) ein Gewindesegment (17) aufweist, welches das Gewinde (12A) oder zumindest einen Abschnitt davon aufweist oder bildet.

9. Stabilisator nach Anspruch 8, **dadurch gekennzeichnet, dass** das Gewindesegment an einem der Längssegmente (9, 10) angeordnet und/oder einstückig damit ausgebildet ist.

10. Stabilisator nach Anspruch 8 oder 9, **dadurch gekennzeichnet, dass** das Gewinde (12A) konisch ausgebildet ist.

11. Stabilisator nach einem der voranstehenden Ansprüche, **dadurch gekennzeichnet, dass** der Kanal (12) zwischen dem Klemmkeil (15) und einer dem Klemmkeil (15) gegenüberliegenden und/oder zugeordneten Gegenfläche (18) gebildet ist.

12. Stabilisator nach Anspruch 11, **dadurch gekennzeichnet, dass** die Gegenfläche (18) schräg zu einer Längsachse (L) des Kanals (12) verläuft.

13. Stabilisator nach Anspruch 11 oder 12, **dadurch gekennzeichnet, dass** die Gegenfläche (18) einen Gewindeabschnitt aufweist.

14. Stabilisator nach einem der voranstehenden Ansprüche, **dadurch gekennzeichnet, dass** der Stabilisator (1) die Schraube (13) aufweist, vorzugsweise wobei die Schraube (13) als Madenschraube ausgebildet ist.

15. System mit einem Stabilisator (1) nach einem der voranstehenden Ansprüche und einer Scheibe (3).
